# FASCICULE DE BREVET EUROPEEN

(11) **EP 0 401 064 B1**
(45) Date de publication et mention de la délivrance du brevet: **25.08.1993**
(21) Numéro de dépôt: 90401212.7
(22) Date de dépôt: 07.05.1990
(51) Int. Cl.: H01S 3/23, H01S 3/094, H01S 3/08

(54) **Lasers de puissance pompés par diodes lasers**
Laser-Dioden-gepumpter Leistungs-Laser
Power laser pumped by laser diodes

(30) Priorité: 30.05.1989 FR 8907079
(43) Date de publication de la demande: 05.12.1990
(73) Titulaire: THOMSON-CSF, 75008 Paris (FR)
(72) Inventeur: Pocholle, Jean-Paul, F-92800 Puteaux (FR); Papuchon, Michel, F-92800 Puteaux (FR)
(74) Mandataire: Guérin, Michel

(56) Documents cités:
- FR-A- 1 556 589
- US-A- 3 753 145
- APPLIED OPTICS, vol. 26, no. 16, 15 août 1987, pages 3177-3179; K. CHAN: "Multiple-pass laser-diode-pumped Nd: YAG amplifier: design"
- PATENT ABSTRACTS OF JAPAN, vol. 5, no. 44 (E-50)[716], 24 mars 1981; & JP-A-55 166 984
- SOVIET JOURNAL OF OPTICAL TECHNOLOGY, vol. 43, no. 1, janvier 1976, pages 61-62, American Institute of Physics, New York, US; L.N. KAPORSKII et al.: "Optomechanical apparatus for the synchronization of giant pulse lasers"

## Description

L'invention concerne des lasers de puissance pompés par diodes lasers et notamment un ensemble de plusieurs lasers de puissance pompés par des diodes lasers.

L'émergence de diodes lasers délivrant des puissances élevées et l'ajustement de la longueur d'onde d'émission à partir d'un contrôle en composition des couches epitaxiées ou en exploitant les propriétés de structures à puits quantiques, permettent d'envisager aujourd'hui la réalisation de sources cohérentes de puissance à partir de lasers solides avec pompage résonnant.

L'emploi de ce concept de pompage par diodes lasers en vue de réaliser des lasers de puissance passe classiquement par l'utilisation de barreaux ou de "slabs" pompés transversalement. Différentes approches ont été proposées, cependant le pompage transverse présente quelques inconvénients :
- le couplage entre les barrettes de diodes lasers et le barreau (ou le "slab") font que les échanges thermiques au niveau du barreau ne sont pas aisés ;
- la dissipation thermique au niveau des diodes lasers nécessite l'emploi de radiateurs encombrants et la commande de ces lasers de pompe impose l'utilisation de conducteurs électriques ayant une certaine rigidité mécanique (forts courants). Ces inconvénients minimisent le nombre de barrettes lasers pouvant être employées pour le pompage transverse .
- le rendement de pompage ne peut être optimisé puisque la répartition spatiale du gain est l'image de la distribution en intensité de l'onde de pompe, ce qui entraîne que le recouvrement entre la distribution du mode dans la cavité et celle du gain est voisine de celle obtenue à l'aide d'un pompage par lampe ou flash (au rendement spectral de pompage près). On voit cependant l'avantage lié à l'emploi d'une structure "slab" par rapport au barreau qui présente la propriété d'avoir à longueur de milieu actif identique, un gain réparti supérieur, puisque le chemin optique est obtenu par réflexion totale multiple ("chemin en zig-zag"). Applied Optics, vol.26, no.110, 15 août 1987, pages 3177-3179, décrit un amplificateur Nd: YAG pompé transversalement par des rangées de diodes lasers.

Une alternative consiste à employer des nappes de fibres optiques qui couplées aux sources de pompage permettent de dissocier par déports les problèmes thermiques au niveau des sources de pompage. Cette configuration de base présente cependant des inconvénients liés au fait que le rendement de couplage (entrée-sortie) dans les faisceaux de fibres n'est pas de 100 %, et que la répartition du gain sera toujours moins bien adaptée au mode de cavité comparativement à celle obtenue par un pompage longitudinal.

Les effets perturbateurs ultimes qui peuvent se manifester dans le barreau laser même en présence d'un pompage résonnant sont également d'ordre thermique.

Dans ce cas, les effets thermiques résiduels sont liés au rendement quantique du transfert qui varie dans le rapport (w₁/wₚ : fréquence transition laser/fréquence absorption (i.e. pompe) et font par exemple que si l'on désire obtenir 1mJ à 1,064 µm à partir de la transition ⁴F_{3/2} ⁴I_{9/2} de l'ion Nd₃₊ inséré dans la matrice YAG, l'énergie de pompe à 0,808 µm devra être de 1,3168 mJ. Cette longueur d'onde de pompe caractérise la bande d'absorption associée à la transition entre les niveaux ⁴ I_{11/1} et ⁴F_{5/2}. Dans ce cas, le rapport W₁/wₚ vaut : 0,7594. Ce qui signifie également que 0,3168 mJ participe à l'échauffement du milieu, cette énergie correspondant aux transitions non radiatives.

Cette remarque est d'autant plus importante que le rapport w₁/wₚ est faible. Ainsi, l'emploi d'un pompage par diodes lasers de l'ion Tm3+ seul se traduit par un rapport w₁/wₚ = 0,785/2,02 = 0,3886. Ce qui veut dire que pour obtenir 1mJ à 2,02 µm il est nécessaire d'utiliser une énergie de pompe à 0,785 µm de 1,6356 mJ ce qui s'accompagne par la dissipation de 0,6336 mJ caractérisant les transitions non radiatives. A l'inverse, l'utilisation d'un codopage Tm³⁺ : Ho³⁺ du YAG permet d'obtenir un rapport w₁/wₚ en tenant compte des effets de relaxations croisées et de transfert de l'ion excité Tm³⁺ sur Ho³ de l'ordre de 0,74.

Ces ordres de grandeurs montrent que l'utilisation d'un pompage résonnant présentera une limitation sur le rendement de pompage imposée par ce rapport w₁/wₚ. Et les effets thermiques résiduels ultimes pouvant se développer dans le cristal laser seront gouvernés par celui-ci.

Le domaine couvert par la présente invention concerne les lasers de puissance état solide pompés par diodes lasers.

L'emploi de diodes lasers pour le pompage de lasers solides a contribué au renouveau de ces sources cohérentes avec les avantages propres au pompage optique résonnant :
- meilleur rendement
- taux de répétition élevé
- diminution des effets thermiques parasites
- etc .....

Les démonstrations ont été reportées pour l'essentiel en utilisant un pompage longitudinal, ce qui limite les niveaux de puissance pouvant être obtenus. En effet, la longueur de barreau ou plus généralement le volume excité efficacement est limité par l'absorption du milieu à la longueur d'onde de pompe. A titre d'exemple pour le Nd : YAG cette longueur vaut 5mm. L'obtention d'un niveau de puissance plus élevé passe alors par un pompage transverse d'un barreau ou d'une plaque de rayon ou d'épaisseur adaptés pour absorber la puissance de la pompe.

Bien que le pompage présente un caractère résonnant, une partie de la puissance absorbée est cependant transformée (via l'excitation de transitions non radiatives) en chaleur. De plus, le niveau de puissance requis pour pomper et réaliser un laser de puissance impose la mise en oeuvre d'un système d'évacuation de calories au niveau des diodes lasers de puissance (rappelons que le rendement de conversion optique/électrique dans une diode laser est typiquement compris entre 40 à 50 %). Se pose alors le problème de la conception d'une tête laser de puissance pompée par diodes lasers prenant en compte ces problèmes.

L'objet de la présente invention est fondée sur la mise en oeuvre d'un nouveau type d'architecture du mode de pompage et de cavité, dans le but de réaliser un laser de puissance pompé par diodes lasers minimisant les effets thermiques résiduels au niveau du milieu actif. Elle repose sur l'emploi d'un pompage longitudinal par diodes lasers de plusieurs barreaux lasers.

L'invention concerne donc des lasers de puissance pompés par diodes lasers, comportant :
- au moins deux diodes lasers (1, 1') émettant un faisceau de pompe (Fp) ;
- au moins deux milieux amplificateurs (3, 3') couplés chacun à une diode laser (1, 1') et possédant chacun une face d'entrée recevant le faisceau de pompe émis par la diode laser (1, 1') associée et retransmettant par une face de sortie 31 un faisceau de sortie (Fs, Fs') ;
- un système de couplage optique (4, 40', 5) recevant les faisceaux de sortie (Fs, Fs') émis par les milieux amplificateurs (3, 3') et les retransmettant selon un faisceau commun (Fc) ;
- un miroir de sortie placé sur le trajet du faisceau commun (Fc) ;

chaque face d'entrée (30) étant réalisée de façon à transmettre le faisceau de pompe (Fp) reçu d'une diode laser (1, 1') et à réfléchir le faisceau de sortie (Fs, Fs') du milieu amplificateur, les différentes faces d'entrée constituant ainsi avec le miroir de sortie une cavité optique.

L'invention concerne également un laser de puissance, caractérisé en ce que les deux diodes lasers et les milieux amplificateurs sont situés symétriquement par rapport à un axe (XX') et que le système de couplage optique comporte, associé à chaque milieu amplificateur des premiers miroirs inclinés par rapport à la direction du faisceau de sortie (Fs, Fs') du milieu amplificateur et situés symétriquement par rapport à l'axe (XX') ainsi que les deuxièmes miroirs également situés symétriquement par rapport à l'axe (XX') recevant les faisceaux de sortie (Fs, Fs') réfléchis par les premiers miroirs et les réfléchissant sensiblement selon l'axe (XX'), ledit miroir de sortie étant aligné selon cet axe (XX').

Plus précisément, l'invention concerne un laser de puissance, comportant une pluralité de diodes lasers et de milieux amplificateurs disposés selon les génératrices d'un cylindre fictif d'axe (XX'), et en ce que le système de couplage optique comprend un premier dispositif réfléchissant comportant une couronne conique réfléchissante ayant pour axe l'axe (XX') du cylindre et réfléchissant les faisceaux de sortie des différents milieux amplificateurs vers l'axe (XX') du cylindre, ainsi qu'un deuxième dispositif réfléchissant comportant une surface conique réfléchissante disposée selon l'axe (XX') du cylindre et réfléchissant les faisceaux de sortie selon l'axe (XX') du cylindre, ledit miroir de sortie étant aligné selon cet axe (XX').

Les différents objets et caractéristiques de l'invention apparaîtront plus clairement dans la description qui va suivre faite à titre d'exemple en se reportant aux figures annexées qui représentent :
- la figure 1, un premier exemple de réalisation du laser de puissance selon l'invention ;
- la figure 2, un deuxième exemple de réalisation du laser de puissance selon l'invention ;
- les figures 3 et 4, une variante du laser de puissance selon l'invention comportant un moyen d'asservissement par un faisceau de commande ;
- la figure 5, une variante du laser de puissance selon l'invention permettant d'émettre un faisceau multi-spectral ;
- la figure 6, une autre variante du laser de puissance de l'invention prévoyant des doubleurs de fréquences ;
- la figure 7, une autre variante du laser de puissance de l'invention prévoyant, sur le faisceau de sortie, une cellule Raman.

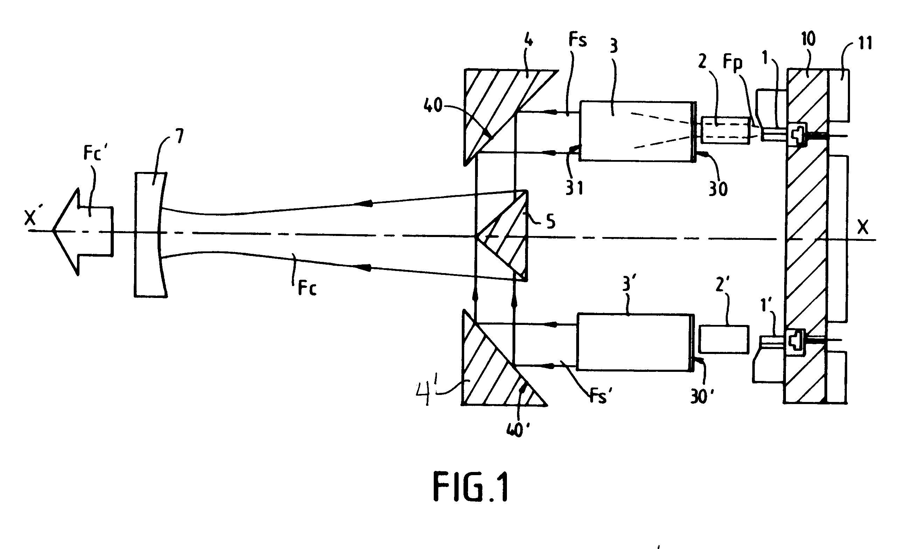

En se reportant à la figure 1, on va donc décrire un exemple de réalisation du dispositif de l'invention.

Sur une embase 10 sont montées des diodes lasers 1 et 1' symétriques par rapport à un axe XX'. Sur la figure 1, le dispositif a été représenté en coupe et seules les deux diodes lasers 1, 1' situées dans le plan de la coupe ont été représentées. Cependant, le dispositif peut comporter sur l'embase 1, un ensemble de diodes lasers disposées selon un cercle d'axe XX'. L'embase pourra alors avoir avantageusement la forme d'un cercle. Elle comporte sur l'une de ses faces et, par exemple, sur la face ne portant pas les diodes lasers, des radiateurs de refroidissement 11. L'embase 10 autorise donc :
- le maintien mécanique des diodes
- la distribution de courant d'alimentation
- l'échange thermique par l'intermédiaire de radiateurs répartis sur la surface opposée
- des logements permettant d'insérer des photodétecteurs de contrôle de la puissance délivrée par chacune des diodes lasers.

Chaque diode laser peut être une association de barrettes empilées ou de rubans composés d'une multitude de diodes lasers.

Chaque diode lasers émet un faisceau de pompe Fp d'une longueur d'onde de pompe déterminée qui pompe longitudinalement chacune un amplificateur tel qu'un barreau laser 3,3' par l'intermédiaire d'une optique d'adaptation 2, 2' de type anamorphoseur.

Chaque barreau laser présente une surface 30, 30' traitée mécaniquement (rayon de courbure) et optiquement (couches multidiélectriques) de façon à présenter un coefficient de réflexion maximum à la longueur d'onde laser et un coefficient de réflexion minimum à la longueur d'onde de pompe propre à l'ion terre rare employé. La longueur de chaque barreau est adaptée au coefficient d'absorption, à la longueur d'onde de pompe et au taux de dopage en poids. La longueur de chaque cristal est de l'ordre de 5 mm. L'autre face du barreau peut être traitée antireflet à la longueur d'onde laser ou/et mise en incidence de Brewster par polissage afin de réaliser une sélection d'état de polarisation sur l'onde laser.

L'utilisation de barreaux multiples permet de répartir les effets thermiques et d'augmenter les surfaces d'échange avec le milieu environnant.

Dans chaque barreau laser 3, 3' un faisceau pompe Fp donne lieu à un faisceau Fs, Fs' qui est transmis à un système optique 4, 4', 5.

Chaque faisceau Fs, Fs' incident sur le système optique qui travaille en réflexions et permet de coupler chaque système élémentaire à un miroir de sortie commun 7.

Plus précisément, ce système optique comporte des dispositifs de réflexion 40, 40' réfléchissant les faisceaux Fs et Fs' vers l'axe XX' et un dispositif de réflexion 5 réfléchissant ces faisceaux selon la direction de l'axe XX' vers un miroir 7 qui constitue alors, avec les surfaces traitées 30, 30' des barreaux 3, 3' une cavité optique.

Dans le cas de diodes lasers 1, 1' et de barreaux 3, 3', disposés selon un cylindre de révolution d'axe XX', les dispositifs de réflexion 40, 40' sont constitués par une dioptre de forme annulaire d'axe XX' présentant, aux faisceaux tels que Fs, Fs' une surface réfléchissant conique. Dans ce cas, le dispositif de réflexion 5 est un dioptre conique d'axe XX' situé sur cet axe pour recevoir les faisceaux Fs, Fs' et les retransmettre sous la forme d'un faisceau Fc, selon l'axe XX', vers le miroir 7. Sur la figure 1, le dispositif 5 est orienté de façon que le faisceau Fc sorte du dispositif.

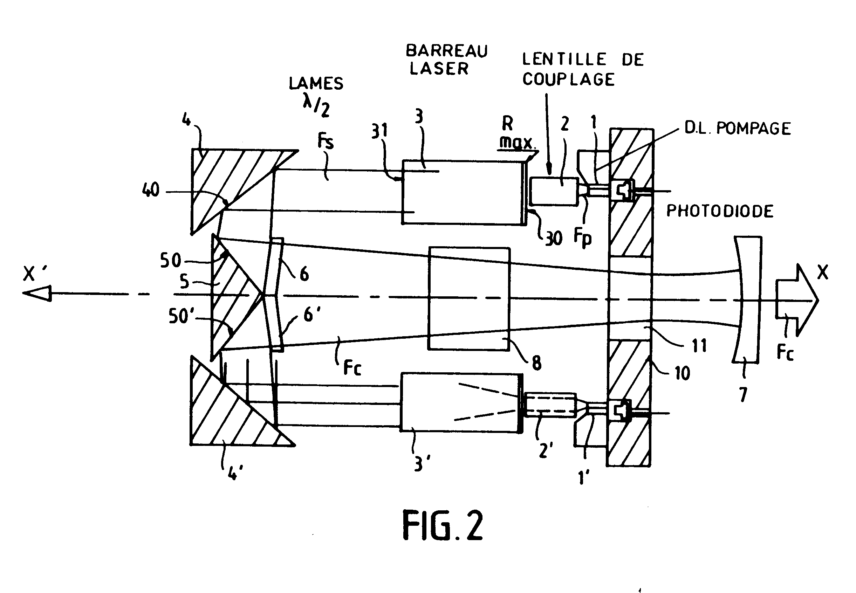

Sur la figure 2, par contre, le dispositif de réflexion 5 est orienté de façon que le faisceau Fc pénètre dans le dispositif. L'embase 10 est alors muni d'un trou 11 permettant au faisceau Fc de sortir du dispositif. Autrement dit si le faisceau Fp est orienté selon le sens de l'axe XX', le faisceau est envoyé par le dispositif de réflexion 5 dans le sens inverse de l'axe XX' ce qui constitue une structure en mode replié.

Un ensemble de lames demi-onde 6, 6' permet d'ajuster l'état de polarisation de chaque faisceau élémentaire afin que l'ensemble de ceux-ci se trouve dans l'état de polarisation adapté pour l'emploi d'un système électrooptique de commande d'ouverture de la cavité à l'aide du commutateur (Q-Switch) 8.

La configuration de la structure de la figure 2 permet de modifier la longueur de cavité par translation de l'ensemble optique 4, 4', 5. Ce qui permet d'ajuster la largeur d'impulsions lasers générées à partir d'un fonctionnement en mode "Q-Switch". Dans ce cas, on modifie la durée de vie du photon dans la cavité.

La réalisation d'un laser de puissance passe par l'insertion d'un système de blocage de la cavité dans le but d'obtenir une forte inversion de population. L'effet électrooptique permet de commander l'ouverture de la cavité et ainsi d'obtenir une très forte émission stimulée. Dans le cas où l'on désire effectuer ou profiter d'un effet de mise en phase des sources élémentaires, les conditions sur l'état de polarisation des faisceaux nécessite l'emploi de lames demi-onde comme cela a été mentionné précédemment et d'un modulateur commun pouvant être positionné en lieu et place du Q-Switch 8.

Pour une configuration plus classique, chaque laser élémentaire peut être commandé individuellement en insérant un modulateur électrooptique non représenté sur chaque voie.

Dans ce cas, il n'est pas nécessaire d'insérer dans la cavité des lames demi-onde.

Rappelons que l'obtention d'une puissance crête élevée nécessite une très forte inversion de population et une très faible fuite au niveau du système d'obturation de la cavité. Le fait de répartir les éléments de commande et le pompage (ou le milieu amplificateur avec gain) permet de maîtriser ces paramètres.

La mise en phase des différents lasers peut être réalisée à partir d'une réflexion sur le miroir de sortie 7 ou sur une réflexion parasite sur le modulateur électrooptique (bien que celui-ci soit traité antireflet).

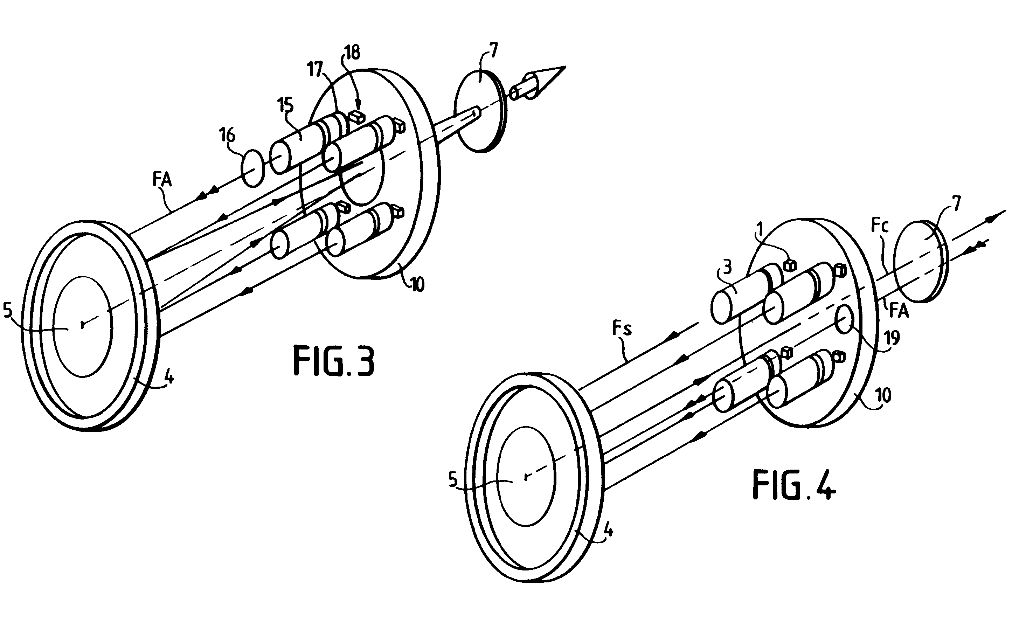

Les figures 3 et 4 représentent des dispositifs selon l'invention dans lesquels on prévoit un faisceau d'asservissement FA servant à la commande pour la mise en phase.

Le dispositif de la figure 3 prévoit une source externe de commande ("seeding") mise à la place d'un des composants constituant l'un des bras du laser et comprenant un laser maître 15 compris dans une cavité définie par deux miroirs 16 et 17 et pompé par une diode laser 18.

La figure 4 représente un dispositif dans lequel un faisceau de commande FA fourni par des moyens extérieurs non représentés est injecté dans le dispositif par une ouverture 19 réalisée dans l'embase 10 en lieu et place d'une diode laser. Le faisceau FA prend alors la place de l'une des voies du dispositif.

Cette conception de laser en barillet permet de réaliser des sources multi-spectrales.

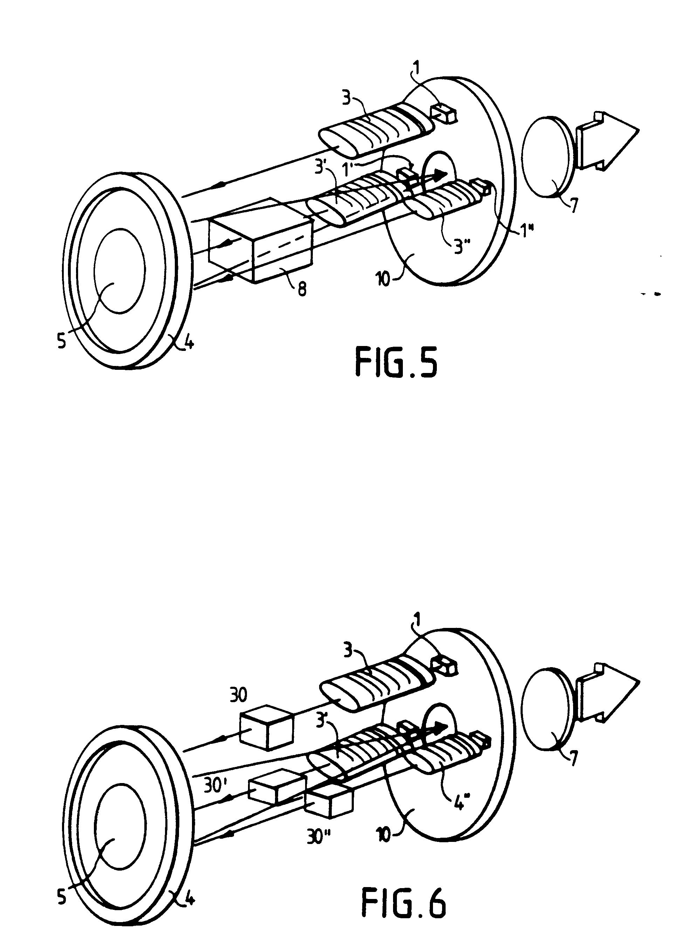

La figure 5 prévoit par exemple d'utiliser pour les milieux amplificateurs 3, 3' et 3'', les matériaux suivants :
- pour le milieu 3 : un matériau laser Nd : YAG pompé à une longueur d'onde de 0,808 µm et émettant à la longueur d'onde de 1,064 µm ;
- pour le milieu 3' : un matériau laser Tm : Ho : YAG pompé à une longueur d'onde de 0,785 µm et émettant à la longueur d'onde 2,02 µm ;
- pour le milieu 3'' : un matériau laser E : iYLF pompé à une longueur d'onde de 0,797 µm et émettant à une longueur d'onde de 2,8 µm.

Les faisceaux provenant de ces milieux sont couplés entre par le système optique 4, 5. Dans ce cas, le miroir de sortie 7 doit présenter un maximum de réflectivité à ces trois longueurs d'ondes.

La figure 6 représente une autre conception de la structure de l'invention. Selon cette conception on prévoit en série avec les milieux amplificateurs 3, 3', 3'' des doubleurs de fréquences 30, 30', 30''.

Les milieux amplificateurs 3, 3', 3'' sont des lasers Nd : YAG.

Lasers Nd : YAG avec pompage par diodes lasers et cavités ajustées aux longueurs d'ondes 0,946 µm, 1,064 µm et 1,318 µm (figure 3b). En effet, ces transitions lasers peuvent être obtenues à partir d'un pompage centré sur 0,808 µm. En présence d'un cristal doubleur en fréquence permettant de générer une onde harmonique pour chacune des raies de l'émission laser, il est possible de réaliser une source blanche. En effet à chacune des raies d'émission correspondent des ondes harmoniques situées respectivement dans le bleu (0,473 µm), dans le vert (0,532 µm) et dans le rouge (0,651 µm).

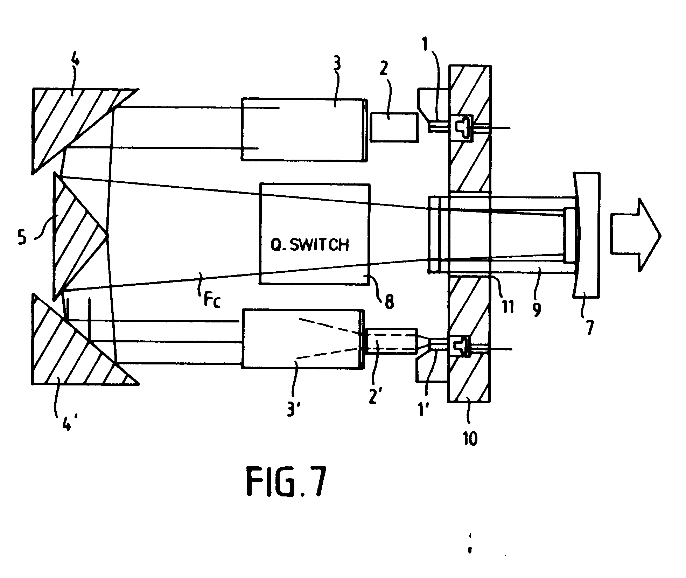

La figure 7 représente une variante de réalisation selon l'invention dans laquelle on prévoit une cellule à gaz sous pression 9 du type RAMAN, qui placée sur le trajet du faisceau commun Fc est pompé par celui-ci. Cette cellule RAMAN 9 permet de réaliser une conversion de fréquence. Par exemple dans une réalisation d'un laser de puissance Nd : YAG travaillant en régime déclenché (Q-Switch) l'insertion d'une cellule RAMAN permet d'obtenir un système compact pouvant être pompé par diodes lasers et travaillant à 1,06 µm ou à 1,53 µm et permettant également de fournir les deux longueurs d'ondes.

L'emploi d'une cellule RAMAN dans la cavité permet de bénéficier de la forte densité de puissance intra-cavité pour obtenir un transfert de fréquence efficace de l'onde de pompe centrée par exemple à 1,064 µm sur l'onde Stokes du méthane à 1,53 µm. Il suffit d'évacuer le méthane ou de diminuer la pression de ce gaz dans la cellule pour obtenir une source travaillant à 1,064 µm.

L'invention ainsi décrite concerne donc une architecture de structure laser prévoyant une répartition du milieu amplificateur et un regroupement des diodes lasers de pompage sur une même surface.

Les avantages d'une telle configuration sont :
- de répartir les effets thermiques résiduels au niveau des différents milieux amplificateurs ;
- de présenter une plus grande surface d'échange thermique du cristal laser avec le milieu d'environnement ;
- de regrouper les diodes lasers de pompe sur une même embase, ce qui simplifie la conception du système d'évacuation de calories ;
- de permettre la réalisation d'un laser compact par repliement de la cavité ;
- d'optimiser le rendement de conversion en utilisant un pompage longitudinal permettant de conserver un bon recouvrement entre le mode de la cavité (identique pour chacune des voies) et la répartition spatiale du gain dans le barreau laser (image de la répartition de la pompe) ;
- de permettre la mise en phase des N bras du système laser (rappelons que dans le cas parfait on aboutit à une addition des champs et l'intensité croit en N²) ;
- de rendre possible l'insertion sur chacune des voies d'un composant doubleur de fréquence ou d'un laser à fréquence d'émission différente (source multi-spectrale) ;
- de permettre la commande de l'ensemble oscillateur par une source "maître" interne au système ou externe ;
- de réaliser une source pouvant travailler sur deux longueurs d'ondes en intégrant au laser une cellule RAMAN ;
- d'utiliser le concept de diodes lasers à rubans pour réaliser le pompage et de répartir celui-ci ;
- enfin, on peut concevoir la réalisation d'une source de puissance multi-spectrale en insérant dans la structure de type barillet différents cristaux et ions terres rares pompés à partir de diodes lasers spectralement adaptées et en réalisant un miroir de sortie présentant un coefficient de réflexion ajusté sur les différentes longueurs d'ondes d'émission.

Les domaines d'applications sont ceux associés à l'emploi :
- des lasers de puissance pompés par diodes lasers et courant les domaines spectraux allant du visible au proche IR (0,5 - 3 µm) en intégrant des opérations de doublage de fréquence intra-cavité ;
- du traitement de faisceaux lasers et de commande de ceux-ci en utilisant les concepts de mise en phase ;
- de sources cohérentes spatialement et spectralement dans le but de les employer pour réaliser des opérations de mélange de fréquences dans des milieux non linéaires (sources accordables).

Il est bien évident que la description qui précède n'a été faite qu'à titre d'exemple.

D'autres variantes peuvent être envisagées sans sortir du cadre de l'invention. Les exemples numériques et les exemples de matériaux n'ont été fournis que pour illustrer la description.

## Revendications

1. Laser de puissance pompé par diodes lasers, comportant :
- au moins deux diodes lasers (1,1') émettant un faisceau de pompe (Fp) ;
- au moins deux milieux amplificateurs (3, 3') couplés chacun à une diode laser (1,1') et possédant chacun une face d'entrée (30) recevant le faisceau de pompe émis par la diode laser (1, 1') associée et retransmettant par une face de sortie 31 un faisceau de sortie (Fs, Fs') ;
- un système de couplage optique (4, 4', 5) recevant les faisceaux de sortie (Fs, Fs') émis par les milieux amplificateurs (3, 3') et les retransmettant selon un faisceau commun (Fc) ;
- un miroir de sortie (7) placé sur le trajet du faisceau commun (Fc) ;
chaque face d'entrée (30) étant réalisée de façon à transmettre le faisceau de pompe (Fp) reçu d'une diode laser (1, 1') et à réfléchir le faisceau de sortie (Fs, Fs') du milieu amplificateur, les différentes faces d'entrée constituant ainsi avec le miroir de sortie (7) une cavité optique.

2. Laser de puissance selon la revendication 1, caractérisé en ce que les deux diodes lasers (1, 1') et les milieux amplificateurs (3, 3') sont situés symétriquement par rapport à un axe (XX') et que le système de couplage optique comporte, associés à chaque milieu amplificateur (3, 3') des premiers miroirs (4, 4') inclinés par rapport à la direction du faisceau de sortie (Fs, Fs') du milieu amplificateur et situés symétriquement par rapport à l'axe (XX') ainsi que des deuxièmes miroirs (50, 50') également situés symétriquement par rapport à l'axe (XX') recevant les faisceaux de sortie (Fs, Fs') réfléchis par les premiers miroirs et les réfléchissant sensiblement selon l'axe (XX'), ledit miroir de sortie (7) étant aligné selon cet axe (XX').

3. Laser de puissance selon la revendication 1, caractérisé en ce qu'il comporte une pluralité de diodes lasers (1, 1') et de milieux amplificateurs (3, 3') disposés selon les génératrices d'un cylindre fictif d'axe (XX'), et en ce que le système de couplage optique (4, 4', 5) comprend un premier dispositif réfléchissant comportant une couronne conique réfléchissante (40) ayant pour axe l'axe (XX') du cylindre et réfléchissant les faisceaux de sortie des différents milieux amplificateurs vers l'axe (XX') du cylindre, ainsi qu'un deuxième dispositif réfléchissant comportant une surface conique réfléchissante disposée selon l'axe (XX') du cylindre et réfléchissant les faisceaux de sortie selon l'axe (XX') du cylindre, ledit miroir de sortie étant aligné selon cet axe (XX').

4. Laser de puissance selon la revendication 3, caractérisé en ce que l'axe du cylindre (XX') étant orienté selon un sens déterminé, l'onde de pompe (Fp) de chaque diode laser est orientée selon ce sens et le deuxième dispositif réfléchissant (5) est orienté de telle façon que le faisceau (Fc') sortant de la cavité optique pour le miroir de sortie (7) est orienté selon ce même sens.

5. Laser de puissance selon la revendication 3, caractérisé en ce que l'axe du cylindre (XX') étant orienté selon un sens déterminé, l'onde de pompe (Fp) de chaque diode laser est orientée selon ce sens et le deuxième dispositif réfléchissant (5) est orienté de telle façon que le faisceau (Fc') sortant de la cavité optique par le miroir de sortie (7) est orienté en sens inverse de l'axe du cylindre (XX').

6. Laser de puissance selon la revendication 1, caractérisé en ce que les diodes laser sont montées sur une même embase métallique (10) assurant le maintien mécanique des diodes, la distribution du courant d'alimentation des diodes et l'échange thermique à l'aide de radiateurs (11) montés sur une face de l'embase métallique (10).

7. Laser de puissance selon la revendication 1, caractérisé en ce qu'il comporte des lames demi-ondes insérées dans la cavité.

8. Laser de puissance selon la revendication 1, caractérisé en ce qu'il comporte un commutateur du type Q-Switch (8) inséré sur le faisceau commun (Fc).

9. Laser de puissance selon la revendication 3, caractérisé en ce qu'il comporte un faisceau de commande (FA) placé selon une génératrice du cylindre et orienté dans le même sens que les faisceaux émis par les diodes lasers (1,1').

10. Laser de puissance selon la revendication 3, caractérisé en ce qu'il comporte à la place de l'un quelconque des amplificateurs, un laser maître (15, 16, 17) émettant un faisceau de commande (FA).

11. Laser de puissance selon la revendication 3, caractérisé en ce qu'il comprend sur le trajet de chaque faisceau de sortie (Fs, Fs'), et à proximité de chaque milieu amplificateur, un doubleur de fréquence.

12. Laser de puissance selon la revendication 1, caractérisé en ce que les différents milieux amplificateurs sont en matériaux de nature différente.

13. Laser de puissance selon la revendication 1, caractérisé en ce qu'il comprend dans la cavité optique, sur le trajet du faisceau commun (Fc), une cellule à gaz sous pression du type RAMAN.

## Patentansprüche

1. Leistungslaser, der von Laserdioden gepumpt wird und enthält:
- mindestens zwei Laserdioden (1, 1'), die einen Pumpstrahl (Fp) aussenden,
- mindestens zwei Verstärkungsmilieus (3, 3'), die je mit einer Laserdiode (1, 1') gekoppelt sind und je eine Eingangsseite (30) besitzen, über die sie den von der zugeordneten Laserdiode (1, 1') ausgesandten Pumpstrahl empfangen, während ein Ausgangsstrahl (Fs, Fs') über eine Ausgangsseite (31) ausgegeben wird,
- ein optisches Koppelsystem (4, 4', 5), das die Ausgangsstrahlen (Fs, Fs'), die von den Verstärkungsmilieus ausgesandt wurden, empfängt und sie in einem gemeinsamen Strahl (Fc) weiterleitet,
- einen Ausgangsspiegel (7), der im Verlauf des gemeinsamen Strahls (Fc) liegt,
wobei jede Eingangsseite (30) so ausgebildet ist, daß sie den von einer Laserdiode (1, 1') empfangenen Pumpstrahl (Fp) durchläßt und den Ausgangsstrahl (Fs, Fs') des Verstärkungsmilieus reflektiert, wobei die verschiedenen Eingangsseiten so mit dem Ausgangsspiegel (7) einen optischen Hohlraum bilden.

2. Leistungslaser nach Anspruch 1, dadurch gekennzeichnet, daß die beiden Laserdioden (1, 1') und die Verstärkungsmilieus (3, 3') symmetrisch bezüglich einer Achse (XX') angeordnet sind, und daß das optische Koppelsystem erste Spiegel (4, 4') in Zuordnung zu jedem Verstärkungsmilieu (3, 3'), die bezüglich der Richtung des Ausgangsstrahls (Fs, Fs') des Verstärkungsmilieus geneigt und symmetrisch bezüglich der Achse (XX') angeordnet sind, sowie zweite Spiegel aufweist, die ebenfalls symmetrisch bezüglich der Achse (XX') angeordnet sind, die Ausgangsstrahlen (Fs, Fs'), die von den ersten Spiegeln reflektiert wurden, empfangen und sie im wesentlichen in Richtung der Achse (XX') umlenken, wobei der Ausgangsspiegel (7) zu dieser Achse (XX') fluchtet.

3. Leistungslaser nach Anspruch 1, dadurch gekennzeichnet, daß er eine Mehrzahl von Laserdioden (1, 1') und von Verstärkungsmilieus (3, 3') besitzt, die entlang von Mantellinien eines fiktiven Zylinders mit der Achse (XX') angeordnet sind, und daß das optische Koppelsystem (4, 4', 5) eine erste reflektierende Vorrichtung mit einem konischen reflektierenden Kranz (40), dessen Achse die Achse (XX') des Zylinders ist und der die Ausgangsstrahlen der verschiedenen Verstärkungsmilieus zur Achse (XX') des Zylinders umlenkt, sowie eine zweite reflektierende Vorrichtung mit einer konischen reflektierenden Oberfläche besitzt, die gemäß der Achse (XX') des Zylinders angeordnet ist und die Ausgangsstrahlen zur Zylinderachse (XX') umlenkt, wobei der Ausgangsspiegel in Flucht zu dieser Achse (XX') angeordnet ist.

4. Leistungslaser nach Anspruch 3, dadurch gekennzeichnet, daß die Pumpwelle (Fp) jeder Laserdiode gemäß einer bestimmten Richtung der Zylinderachse (XX') orientiert ist, während die zweite reflektierende Vorrichtung (5) so angeordnet ist, daß der aus dem optischen Hohlraum in Richtung zum Ausgangsspiegel (7) austretende Strahl (Fc') in derselben Richtung der Zylinderachse (XX') orientiert ist.

5. Leistungslaser nach Anspruch 3, dadurch gekennzeichnet, daß die Pumpwelle (Fp) jeder Laserdiode in einer bestimmten Richtung entlang der Zylinderachse (XX') orientiert ist, während die zweite reflektierende Vorrichtung (5) so angeordnet ist, daß der aus dem optischen Hohlraum in Richtung zum Ausgangsspiegel (7) austretende Strahl (Fc') entgegengesetzt der bestimmten Richtung der Zylinderachse (XX') verläuft.

6. Leistungslaser nach Anspruch 1, dadurch gekennzeichnet, daß die Laserdioden auf einem gemeinsamen metallischen Sockel (10) sitzen, der den mechanischen Halt der Dioden, die Verteilung der Speiseströme für die Dioden und den Wärmeaustausch mit Hilfe von Radiatoren (11) gewährleistet, die auf einer Seite des Metallsockels (10) montiert sind.

7. Leistungslaser nach Anspruch 1, dadurch gekennzeichnet, daß er λ/2-Lamellen enthält, die in den Hohlraum eingesetzt sind.

8. Leistungslaser nach Anspruch 1, dadurch gekennzeichnet, daß er einen Schalter des Typs Q-Switch (8) enthält, der in die Strecke des gemeinsamen Strahls (Fc) eingefügt ist.

9. Leistungslaser nach Anspruch 3, dadurch gekennzeichnet, daß er einen Steuerstrahl (FA) besitzt, der entlang einer Mantellinie des Zylinders verläuft und in derselben Richtung wie die von den Laserdioden (1, 1') ausgesandten Strahlen orientiert ist.

10. Leistungslaser nach Anspruch 3, dadurch gekennzeichnet, daß er anstelle irgendeines der Verstärker einen Meisterlaser (15, 16, 17) enthält, der einen Steuerstrahl (FA) aussendet.

11. Leistungslaser nach Anspruch 3, dadurch gekennzeichnet, daß er im Verlauf jedes Ausgangsstrahls (Fs, Fs') und in der Nähe jedes Verstärkungsmilieus einen Frequenzverdoppler enthält.

12. Leistungslaser nach Anspruch 1, dadurch gekennzeichnet, daß die verschiedenen Verstärkungsmilieus aus Materialien unterschiedlicher Art bestehen.

13. Leistungslaser nach Anspruch 1, dadurch gekennzeichnet, daß er in dem optischen Hohlraum, und zwar in der Strecke des gemeinsamen Strahls (Fc), eine Zelle mit Gas unter Druck vom RAMAN-Typ enthält.

## Claims

1. Power laser pumped by laser diodes, including:
- at least two laser diodes (1, 1') emitting a pump beam (Fp);
- at least two amplifying media (3, 3') each coupled to a laser diode (1, 1') and each possessing an input face (30) receiving the pump beam emitted by the associated laser diode (1, 1') and retransmitting an output beam (Fs, Fs') via an output face 31;
- an optical coupling system (4, 4', 5) receiving the output beams (Fs, Fs') emitted by the amplifying media (3, 3') and retransmitting them as a common beam (Fc):
- an output mirror (7) placed in the path of the common beam (Fc);
each input face (3) being produced in such a way as to transmit the pump beam (Fp) received from a laser diode (1, 1') and to reflect the exit beam (Fs, Fs') from the amplifying medium, the different input faces thus constituting an optical cavity with the output mirror (7).

2. Power laser according to Claim 1, characterised in that the two laser diodes (1, 1') and the amplifying media (3, 3') are situated symmetrically with respect to an axis (XX') and that the optical coupling system includes, associated with each amplifying medium (3, 3') first mirrors (4, 4') inclined with respect to the direction of the output beam (Fs, Fs') from the amplifying medium and situated symmetrically with respect to the axis (XX') as well as second mirrors (50, 50') also situated symmetrically with respect to the axis (XX') receiving the output beams (Fs, Fs') reflected by the first mirrors and reflecting them substantially along the axis (XX'), the said output mirror (7) being aligned along this axis (XX').

3. Power laser according to Claim 1, characterised in that it includes a plurality of laser diodes (1, 1') and of amplifying media (3, 3') arranged along the generatrices of a hypothetical cylinder with axis (XX'), and in that the optical coupling system (4, 4', 5) comprises a first reflecting device including a reflecting conical crown (40) having, as its axis, the axis (XX') of the cylinder and reflecting the output beams from the various amplifying media towards the axis (XX') of the cylinder, as well as a second reflecting device including a reflecting conical surface arranged along the axis (XX') of the cylinder and reflecting the output beams along the axis (XX') of the cylinder, the said output mirror being aligned along this axis (XX').

4. Power laser according to Claim 3, characterised in that as the axis of the cylinder (XX') is oriented along a defined direction, the pump wave (Fp) from each laser diode is oriented along this direction and the second reflecting device (5) is oriented in such a way that the beam (Fc') coming out of the optical cavity through the output mirror (7) is oriented along this same direction.

5. Power laser according to Claim 3, characterised in that as the axis of the cylinder (XX') is oriented along a defined direction, the pump wave (Fp) from each laser diode is oriented along this direction and the second reflecting device (5) is oriented in such a way that the beam (Fc') coming out of the optical cavity through the output mirror (7) is oriented in the opposite direction of the axis of the cylinder (XX').

6. Power laser according to Claim 1, characterised in that the laser diodes are mounted on the same metal base (10) ensuring the mechanical retention of the diodes, the distribution of the supply current to the diodes and the heat exchange with the aid of radiators (11) mounted on one face of the metal base (10).

7. Power laser according to Claim 1, characterised in that it includes half-wave plates inserted into the cavity.

8. Power laser according to Claim 1, characterised in that it includes a switch of the Q-Switch type (B) inserted into the common beam (Fc).

9. Power laser according to Claim 3, characterised in that it includes a control beam (FA) placed along a generatrix of the cylinder and oriented in the same direction as the beams emitted by the laser diodes (1, 1').

10. Power laser according to Claim 3, characterised in that it includes, in place of any one of the amplifiers, a master laser (15, 16, 17) emitting a control beam (FA).

11. Power laser according to Claim 3, characterised in that it comprises a frequency doubler in the path of each output beam (Fs, Fs') and in proximity to each amplifying medium.

12. Power laser according to Claim 1, characterised in that the various amplifying media are made in materials of different type.

13. Power laser according to Claim 1, characterised in that comprises a pressurised-gas cell of the RAMAN type in the optical cavity, in the path of the common beam (Fc).
